# FASCICULE DE BREVET EUROPEEN

(11) **EP 2 922 443 B1**
(45) Date de publication et mention de la délivrance du brevet: **09.06.2021**
(21) Numéro de dépôt: 13792403.1
(22) Date de dépôt: 20.11.2013
(51) Int. Cl.: G06F 3/0481, G06F 3/0488, G06F 3/041, A47B 21/007, G06F 3/0484, G06F 1/16

(54) **DISPOSITIF ET PROCEDE DE PARTAGE VISUEL DE DONNEES**
VORRICHTUNG UND VERFAHREN ZUR VISUELLEN GEMEINSAMEN NUTZUNG VON DATEN
DEVICE AND METHOD FOR VISUAL SHARING OF DATA

(30) Priorité: 20.11.2012 FR 1261021
(43) Date de publication de la demande: 30.09.2015
(73) Titulaire: IMMERSION, 33100 Bordeaux (FR)
(72) Inventeur: CHARTIER, Christophe, F-33000 Bordeaux (FR); DE LA RIVIERE, Jean-Baptiste, F-33000 Bordeaux (FR)
(74) Mandataire: Ipside
(86) Numéro de dépôt international: PCT/EP2013/074320
(87) Numéro de publication internationale: WO 2014/079902

(56) Documents cités:
- EP-A2- 2 267 595
- WO-A2-2008/067414
- US-A1- 2007 064 004
- US-A1- 2008 198 138
- US-A1- 2009 217 177
- US-A1- 2010 179 864
- US-A1- 2010 281 395
- US-A1- 2012 162 351
- US-A1- 2012 192 084
- Joseph Starr: "The Elements Media T1 Visions Social Touchscreen by Agati", , 8 mars 2012 (2012-03-08), XP002699707, Extrait de l'Internet: URL:http://media.designerpages.com/3rings/ 2012/03/08/the-elements-media-t1-visions-s ocial-touchscreen-by-agati/ [extrait le 2013-06-26]
- Agati Furniture: "ELEMENTS MEDIA T1VISIONS Social Touchscreen Solutions", , 2012, XP002699708, Extrait de l'Internet: URL:http://www.agati.com/site/files/822/12 9249/431626/599841/Agati_Elements_Media_T1 info.pdf [extrait le 2013-06-26]
- Anonymous: "AGATI Furniture - Library Furniture, Education, Healthcare, Hospitality, Corporate, Custom", , 4 March 2012 (2012-03-04), XP055441898, Retrieved from the Internet: URL:https://web.archive.org/web/2012030407 4924/http://www.agati.com:80/media-t1/ [retrieved on 2018-01-17]
- Anonymous: "How to Use AirDrop in Mac OS X", , 31 October 2012 (2012-10-31), XP055754158, Retrieved from the Internet: URL:https://web.archive.org/web/2012103100 2734/https://osxdaily.com/2011/11/14/how-t o-use-airdrop-in-mac-os-x/ [retrieved on 2020-11-25]

## Description

### Domaine technique

La présente invention est relative à un dispositif de partage visuel de données, et au procédé de partage qui lui est associé.

Plus précisément, l'invention concerne un partage local de données, c'est-à-dire un partage de données entre différentes personnes en réunion présentes, en particulier dans un même lieu.

En effet, dans un contexte industriel, scientifique ou éducatif, il est fréquent qu'un groupe de personnes se réunisse dans un même lieu pour échanger sur un ou plusieurs sujets.

### Etat de la technique antérieure

Aujourd'hui, il est courant d'utiliser un ordinateur pour présenter des données à différentes personnes depuis un même écran.

Les données présentées peuvent être mises à disposition des personnes présentes, sur le moment ou ultérieurement, sur un support papier ou sur un support numérique tel qu'un ordinateur portable ou une tablette tactile.

Les données sont ainsi partagées, et chacun peut les annoter ou les modifier sur son propre support avec des données supplémentaires, par exemple issues des propos et des interventions des différentes personnes présentes, solution qui s'avère fastidieuse et peu pratique lorsque les données initiales doivent être enrichies.

Il est également fréquent lors de réunions de travail collaboratif de devoir partager des informations enregistrées dans des formats spécifiques différents, par exemple des formats propres à différents logiciels de conception assisté par ordinateur (CAO).Dans ces cas, le partage local de données, nécessite un ordinateur capable de lire tous les différents formats pour centraliser les données à partager et les afficher sur l'écran de partage.

Cette méthode d'une part manque de rapidité et de flexibilité et d'autre part s'avère coûteuse, la plupart de ces logiciels de création ayant des licences d'utilisation payantes.

En outre ces solutions nécessitent des transferts de fichiers volumineux et de ressources matérielles performantes pour lancer simultanément les applications nécessaires s'il veut être évité une perte de temps en lançant une application à chaque ouverture d'un fichier. Un autre inconvénient des méthodes connues concerne la confidentialité des données apportées par chaque membre de l'équipe qui n'est pas protégée, en particulier lorsqu'un fichier est recopié sur un ordinateur tiers pour en afficher des résultats.

En effet, un accès total aux fichiers de données doit être autorisé pour que l'ordinateur centralisant les données puisse les exploiter.

Par conséquent, cette deuxième méthode de partage local de données n'est pas optimale.

Il existe aussi dans l'état de la technique des moyens de partage permettant de partager en temps réel par l'intermédiaire d'un réseau local un flux vidéo d'un ordinateur.

Bien que ces moyens de partage apportent une meilleure solution que les méthodes de partage précédentes en ce qui concerne la flexibilité et le contrôle d'accès aux données, il est difficile voire impossible de partager en temps réel les flux vidéo, et donc les données, issus de plusieurs ordinateurs.

En effet, malgré les performances croissantes présentées par les réseaux locaux, les flux vidéo sont de plus en plus importants en raison de l'augmentation de la résolution des écrans, et le nombre de flux vidéo partagés vient forcément à être limité par la bande passante maximale du réseau utilisé.

Même lorsqu'un seul flux vidéo est partagé, il peut être constaté des temps de latence à l'affichage sur l'écran de l'ordinateur de destination, la vitesse de transfert d'un flux vidéo par un réseau local étant plus lente que celle d'un transfert par simple câble vidéo.

Aussi, ces moyens de partage ne permettent généralement pas d'afficher simultanément, et côte-à-côte sur un même écran, des données issues d'ordinateurs différents ou de sources hétérogènes.

Il existe également des solutions tirant parti de tables interactives, le plus souvent tactiles, permettant d'afficher des informations numériques .

Ces solutions souffrent cependant des mêmes défauts que les autres méthodes citées. En effet, leurs capacités de transmission, de traitement et de récupération des informations sont lentes et peu flexibles.

Généralement, les données doivent passer par la copie de fichier sur des périphériques de stockage de masse et leur nouvelle copie sur la table. Aucun moyen n'est proposé pour accélérer l'échange en temps réel de l'information accessible sur un terminal informatique.

Bien qu'elles permettent d'afficher et de manipuler plusieurs informations numériques sur une seule surface, ces solutions sont également limitées dans les formats, données et échanges qu'elles peuvent supporter.

En effet, il est par exemple impossible d'ajouter des annotations par-dessus l'ensemble ou un sous-ensemble des données affichées, provenant de sources et de formats hétérogènes, pour créer de nouvelles informations enrichies de l'expertise des utilisateurs.

Il est également compliqué de dupliquer l'information affichée pour qu'elle soit à disposition de chacun des utilisateurs et puisse être visualisée en tout confort, tout en assurant une synchronisation des actions des différents utilisateurs pour permettre une mise à jour simultanée de chacun des contenus dupliqués. En effet, les solutions existantes se concentrent sur l'envoi d'une vignette d'un utilisateur à l'autre, auquel cas l'utilisateur initial n'a plus le contenu à disposition.

Aussi, la présente invention vise à pallier les inconvénients de l'art antérieur. US 2010/281395 A1 divulgue un système et un procédé de transfert de fichiers à distance, lequel procédé comporte les étapes de montrer, dans une écran à distance, un objet associé avec un fichier stocké dans un ordinateur et de déclencher le transfert dudit fichier par un glisser/déposer dudit objet dans une partie de l'écran à distance effectué par l'utilisateur dudit ordinateur.

### Exposé de l'invention

A cet effet, l'invention a pour objet un ensemble selon la revendication 1.

Grâce à la combinaison d'un tel rebord, des moyens de connexion réseau, le dispositif selon l'invention permet le partage de données entre différentes personnes, simplement et de manière intuitive, ce partage étant visuel grâce à l'écran tactile et permettant à la personne exposant des données de conserver le choix des données qu'il transmet et la confidentialité de son ses fichiers informatiques.

Par image instantanée, l'invention entend tout moyen de représenter, enregistrer et partager des informations numériques, de quelque dimension ou format qu'elles soient.

Cela inclut, d'une part, de façon classique, tout fichier numérique stockant des données sous un format donné.

Dans un mode de réalisation, ces données comprennent les formats bien connus que sont les JPG, PNG, PDF, DOC, XLS, OBJ, ou CATIA.

Cela inclut également les informations textuelles qui pourraient être copiées ou entrées par l'utilisateur.

Dans un mode de réalisation, ces données représentent une URL ou des informations textuelles qui se suffisent à elles-mêmes ou destinées à compléter les informations accessibles dans une autre image instantanée.

Cela inclut enfin, d'autre part, la capture et l'enregistrement des données interprétées et/ou affichées sur l'écran d'un terminal informatique.

Dans un mode de réalisation préféré, ces données sont une copie sous forme de fichier image de l'ensemble des pixels affichés à l'écran, permettant de partager le contenu de l'écran d'un utilisateur à un instant précis.

Avantageusement, dans ce mode de réalisation préféré, cette copie sous forme de fichier image peut être accompagnée d'un ensemble de métadonnées enregistrant les caractéristiques des contenus interprétés et/ou affichés au moment de la capture de l'image instantanée.

Dans un autre mode de réalisation, ces données sont un flux vidéo encodé en temps réel d'un affichage écran, pouvant être décodé par les moyens de traitement du dispositif de partage, et permettant ainsi de partager à distance les animations de l'écran d'un terminal.

Dans encore un autre mode de réalisation, ces données sont un enregistrement sous forme d'image d'un ensemble d'annotations réalisées par-dessus un ensemble d'images instantanées, le dispositif de partage lui-même étant considéré comme un terminal informatique.

Avantageusement, le support de l'ensemble de ces images instantanées permet aux moyens de traitement de l'invention de prendre en compte de façon transparente n'importe quelle information numérique, qui peut ainsi être transmise ou visualisée soit sous forme de fichier, soit sous forme de capture d'écran, soit sous forme de partage vidéo d'écran.

Dans une forme de réalisation de l'ensemble la capture d'une image instantanée réalisée sur l'ordinateur, ou terminal incorporant un ordinateur, comporte des métadonnées prédéfinies dans le logiciel client résident sur le dit ordinateur, ou terminal incorporant un ordinateur, le cas échéant suite à un paramétrage ou une saisie de données par l'utilisateur de l'ordinateur, ou terminal incorporant un ordinateur, associée à l'image et transmise au système avec ladite image instantanée capturée.

Il est ainsi conservé ou apporté aux informations transmises des attributs utiles au informations et en particulier des moyens de traçabilité des informations.

Dans une forme de réalisation les actions sur une vignette affichées comporte tout ou partie de : réduire une vignette en icône et afficher l'image instantanée correspondant à une vignette ;manipuler ladite image instantanée ; dupliquer ladite image instantanée ; agréger une pluralité d'images instantanées reçues ; enrichir ladite image instantanée ; annoter ladite image instantanée ; archiver ladite image instantanée ; renvoyer ladite image instantanée, le cas échéant enrichie, à un ou plusieurs ordinateurs connectés en réseau avec le dispositif.

Ainsi il est possible de réaliser sur l'écran tactile des manipulations d'images correspondant à des informations des images instantanées afin d'en rendre un accès visuel plus clair et plus confortable au participant à une réunion autour du dispositif et de saisir de nouvelles données relatives à ces images instantanées.

Dans une forme de réalisation, le système comporte au moins un bouton physique connecté aux moyens de traitement et permettant à un utilisateur d'agir sur les données affichées sur l'écran tactile.

Dans une forme de réalisation les moyens de traitement sont configurés de sorte qu'une action sur un bouton virtuel affiché sur l'écran tactile et ou un bouton physique a pour effet de bloquer tout ou partie des interprétations de tout ou partie des interactions d'un opérateur sur tout ou partie de l'écran tactile.

Dans une forme de réalisation les moyens de traitement sont configurés de sorte qu'une action sur un bouton virtuel affiché sur l'écran tactile et ou un bouton physique a pour effet de réaliser une capture d'une image instantanée de données interprétées et ou affichées sur l'écran tactile et de sauvegarder ladite image instantanée dans les moyens de mémorisation des données.

Il est dans ces forme possible de réaliser rapidement et intuitivement des instructions de haut niveau sur les images instantanées.

Dans une forme de réalisation, les moyens de traitement sont configurés de sorte que des images instantanées de données capturées sur l'écran tactile et sauvegardées dans les moyens de mémorisation des données sont accessibles par une fenêtre d'archivage affichée sur l'écran tactile.

Il est ainsi possible de conserver des traces des actions réalisées et des étapes intermédiaires d'une réunion de travail, par exemple au fin de création d'un compte rendu.

Dans une forme de réalisation, les moyens de traitement sont configurés de sorte qu'une action sur un bouton virtuel affiché sur l'écran tactile et ou un bouton physique a pour effet d'activer, et ou de désactiver, des fonctions d'annotation sur tout ou partie de l'écran tactile.

Il est ainsi possible de protéger certaines catégories d'action en les activant ou les désactivant, éventuellement indépendamment pour chaque vignette, voire d'éviter des conflits entre des actions réalisées par différents participants sur des vignettes liées.

Dans une forme de réalisation le bâti du dispositif est agencé sous la forme d'une table dans laquelle est intégré l'écran tactile entre quatre rebords formant un cadre audit écran tactile, ledit cadre étant d'une largeur égale ou supérieure à vingt centimètres, et le dit bâti comportant de préférence des prises de raccordement au réseau local et ou des prises d'alimentation électrique pour au moins un ordinateur ou terminal incorporant un ordinateur, de préférence autant de prises de chaque type que de postes de travail prévus autour de la table.

Il est ainsi obtenu un dispositif particulièrement ergonomique et regroupant dans une forme adaptée tous les besoins des participant à une réunion.

L'invention s'adresse également à un procédé selon la revendication 10.

Il est ainsi échangé entre des participant des informations maîtrisées sur lesquelles les participants vont pouvoir travailler collaborativement.

Selon l'invention, la transmission par l'ordinateur ou terminal incorporant un ordinateur est déclenchée par au moins un clic sur un bouton virtuel d'un logiciel client résidant sur ledit ordinateur, ou terminal incorporant un ordinateur, ou par un glisser/déposer d'un fichier dans une fenêtre d'envoi dudit logiciel client.

Le propriétaire de l'ordinateur devant transmettre une image instantanée maîtrise le contenu et le moment de transmission des informations portées par l'image instantanée.

Dans une forme de mise en œuvre, le dispositif transmet une image instantanée de données capturée sur ledit dispositif de partage visuel de données, via les moyens de connexion réseau, à un ordinateur ou terminal incorporant un ordinateur, connecté audit réseau, par au moins un clic sur une vignette affichée sur l'écran tactile et identifiant ledit ordinateur, ou terminal incorporant un ordinateur, ou par un glisser/déposer d'un fichier dans ladite vignette.

Il est ainsi assuré une transmission simple en retour des images instantanée vers les différents participant à une réunion de manière collective ou de manière sélective.

Dans une forme de mise en œuvre, le dispositif de partage visuel bloque tout ou partie des interprétations de tout ou partie des interactions d'un opérateur sur tout ou partie de l'écran tactile suite à une action sur un bouton virtuel affiché sur l'écran tactile et ou un bouton physique.

Dans une forme de mise en œuvre, une image en deux dimensions ou en trois dimensions est affichée sur l'écran tactile lorsque l'image instantanée transmise par l'ordinateur, ou terminal incorporant un ordinateur, correspond à des données numériques d'une image en deux dimensions ou en trois dimensions.

Les images instantanées sont ainsi affichées automatiquement sauf à ce qu'une métat donnée transmise avec l'image instantanée ou un paramétrage du système ne limite cette possibilité.

Dans une forme de mise en oeuvre, lorsqu'une image instantanée est représentées deux ou plus fois par des vignettes affichées sur l'écran tactile, tout ou partie d'interprétations réalisées par le dispositif sur une des dites vignettes, d'actions d'un opérateur, est répercutée sur toutes les autres dites vignettes.

Chaque participant qui dispose d'une vignette peut donc suivre le travail réalisé par un des participant sur une vignette.

Dans une forme de mise en œuvre, le dispositif conserve dans des moyens de mémorisation dudit dispositif des sauvegardes de tout ou partie des images de l'écran tactile, lesdites sauvegardes étant réalisée périodiquement à intervalle de temps défini, et ou à chaque action concourant à un enrichissement des informations contenues dans une image instantanée, et ou sur une action d'un opérateur sur un bouton virtuel ou réel.

Ainsi il est évité de perdre une information qui n'a été présente que temporairement sur l'écran tactile et de conserver la trace des propositions.

Bien entendu, les moyens de connexion réseau étant bidirectionnels, ce procédé de partage est symétrique.

Aussi, dans un mode de réalisation préféré, une image instantanée effectuée à partir du dispositif de partage peut être transmise, et/ou stockée, et/ou affichée sous forme de fenêtre sur au moins un des terminaux informatiques connectés.

Le fait de réaliser de simples images instantanées des données à partager et de les afficher sur l'écran tactile sous forme de vignettes permet de s'affranchir des problèmes liés à la limitation de la bande passante, de contrôler l'accès donné à ces données aux autres utilisateurs, de simplifier les interactions entre les utilisateurs via le dispositif de partage pour faciliter la compréhension par les utilisateurs des données affichées par l'écran tactile, et aussi de faciliter l'archivage des données partagées au cours d'une réunion de travail collaboratif.

### Brève présentation des figures

D'autres caractéristiques et avantages ressortiront de la description qui va suivre de l'invention, description donnée à titre d'exemple uniquement, en regard des dessins annexés sur lesquels :
- la figure 1 est une vue en perspective d'un dispositif de partage visuel de données selon l'invention,
- la figure 2 est une vue de côté d'un dispositif de partage visuel de données selon l'invention,
- les figures 3 à 10 sont différentes captures d'écran représentées schématiquement et illustrant les possibilités de partage de données offertes par le dispositif et le procédé de partage visuel de données selon l'invention.

### Exposé détaillé d'un mode de réalisation

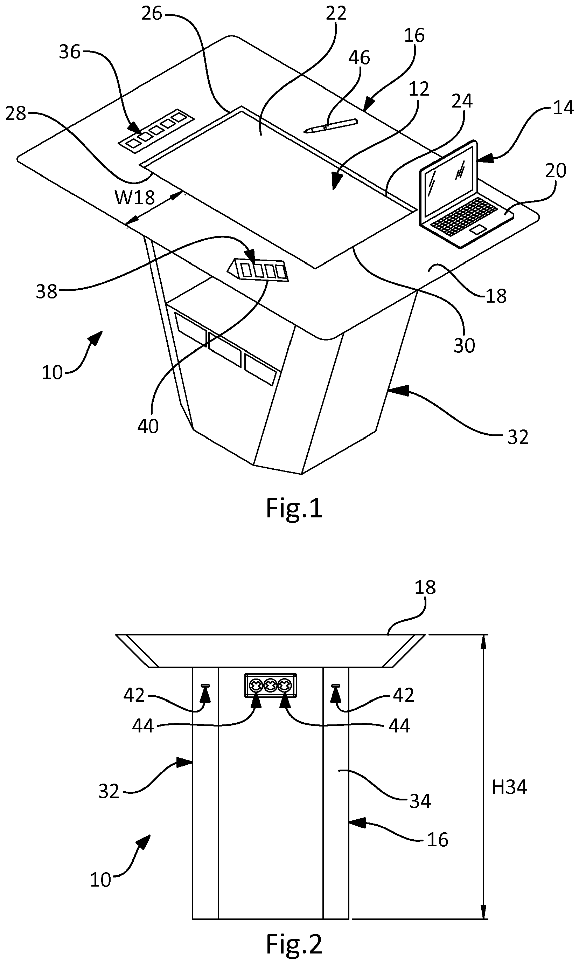

La figure 1 présente schématiquement un dispositif 10 de partage visuel de données suivant l'invention.

Le dispositif 10 de partage visuel de données comprend des moyens de traitement et des moyens de mémorisation de données, un écran tactile 12 de préférence de type "multitouch", et des moyens de connexion réseau autorisant une connexion avec un ou plusieurs ordinateurs 14.

Les moyens de traitement incluent au moins une unité logique comprenant la capacité de réceptionner des données par le réseau, de les interpréter, de les afficher, de les manipuler, de les dupliquer, de les agréger, de les enrichir, de les annoter globalement ou localement, de les archiver, de les renvoyer par le réseau.

Enrichir et annoter des données consiste dans le dispositif de l'invention à leur adjoindre des données complémentaires, par exemple des remarques ou des modifications soumises par les participants à une réunion de travail collaboratif, pour en modifier au moins une apparence.

Ce dispositif 10 de partage comprend un bâti 16 comportant au moins un rebord 18 adjacent à l'écran tactile 12 et sur lequel peuvent être posés un ou plusieurs ordinateurs portables et ou un ou plusieurs terminaux mobiles incorporant un ordinateur 20 sans qu'ils empiètent sur la surface 22 de l'écran tactile.

De préférence, ce rebord 18 a une largeur W18 supérieure ou égale à vingt centimètres.

Afin d'accueillir différents utilisateurs tout autour de l'écran tactile 12, le rebord 18 entoure l'écran tactile 12 sur ses quatre côtés (24,26,28,30).

Dans un mode de réalisation préféré visant à faciliter le travail collaboratif, le dispositif 10 de partage visuel prend la forme d'une table 32, l'écran tactile 12 et le rebord 18 reposant horizontalement sur un socle 34, comme l'illustre la vue de côté du dispositif en figure 2.

Ainsi, tous les utilisateurs présents autour de la table 32 peuvent voir les données affichées sur l'écran tactile 12, et opérer ou suivre des manipulations de ces données réalisées pendant une réunion via l'écran tactile.

Par manipulation, l'invention entend toute interaction d'un utilisateur ayant un effet sur les données affichées, dont l'objectif peut être de réaliser des opérations sur une vignette, visant à créer ou accéder à d'autres contenus, ou en changer ses caractéristiques géométriques ou spatiales absolues ou relatives à d'autres contenus ou contenants, ou sur les données qu'elle contient, visant à en ajuster la représentation ou l'interprétation.

Dans un mode de réalisation, les opérations sur les vignettes comporte de les déplacer sur un plan 2D, de leur faire subir des rotations, d'en changer des dimensions, d'accéder à des métadonnées qui leur sont associées, de les dupliquer, de les annoter et d'y pointer ou surligner des informations particulières.

Dans un mode de réalisation, les opérations sur le contenu des données sont spécifiques à la nature d'une instantanée manipulée, et comporte notamment d'effectuer un zoom d'une image, de manipuler un modèle 3D, ou de se déplacer dans un document texte.

De préférence, le socle 34 maintient l'écran tactile 12 et le rebord 18 a une hauteur H34 supérieure ou égale à 1 mètre. Ainsi, des personnes debout peuvent participer à la réunion, et de simples observateurs ont un meilleur point de vue sur les données échangées.

En variante, le socle 34 peut maintenir l'écran tactile 12 et le rebord 18 à une hauteur H34 inférieure, comme aux alentours de 75 cm pour former une table de réunion standard, ou aux alentours de 45 cm pour former une table basse.

Avantageusement, le dispositif 10 de partage comporte des chaises, ou des tabourets, disposées autour de la table 32 et de hauteur adaptée pour assurer le confort des utilisateurs du dispositif 10.

Avantageusement, le socle 34 contient les moyens de traitement et les moyens de mémorisation de données, et intègre les moyens de connexion réseau.

Afin de faciliter certaines manipulations des données affichées sur l'écran tactile 12, notamment par des utilisateurs peu habitués à une manipulation tactile, le rebord 18 intègre le cas échéant des boutons physiques 36 permettant à un utilisateur d'agir sur les données affichées sur l'écran tactile 12.

En variante, des boutons physiques 38 peuvent être prévus sur un boîtier 40 déplaçable et relié aux moyens de traitements du dispositif 10 de partage.

Dans un mode de réalisation, afin de faciliter certaines manipulations des données affichées sur l'écran tactile 12, et notamment pour annoter des données complémentaires associées à celles-ci, le dispositif 10 de partage comporte un stylet électronique 46 adapté pour fonctionner avec l'écran tactile 12.

Afin de compléter les moyens d'importation de données à partager, et de faciliter l'exportation de données partagées, numériquement ou sur un support physique, le dispositif 10 de partage visuel comprend des prises 42 pour la connexion de périphériques extérieurs de stockage de masse, comme par exemple une clé USB ou un disque dur externe, ou d'une imprimante.

Avantageusement, le dispositif 10 de partage visuel comprend aussi des prises 44 d'alimentation électrique pour le branchement du ou des ordinateurs 20 connectés avec le dispositif 10 de partage.

Le dispositif 10 de partage est particulièrement conçu pour partager des données depuis tout type d'ordinateur ou de terminal incorporant un ordinateur plus ou moins puissant, en particulier des ordinateurs 20 portables, des tablettes numériques,des smartphones, d'autres dispositifs de partage 10 ... pour autant qu'ils disposent de moyens de connexion réseau compatibles avec les moyens de connexion du dispositif 10.

Toutefois, les moyens de connexion réseau peuvent aussi permettre de connecter le cas échéant un ordinateur de bureau, de type « desktop », qui dispose aussi de moyens de connexion réseau.

La connexion peut être réalisée par câble ou sans fil, par liaison radio ou par liaison infrarouge, suivant les moyens de connexion réseau mis en oeuvre par le dispositif 10 de partage.

Grâce à ses moyens de connexion réseau, le dispositif 10 de partage peut être connecté sur le même réseau local que les autres ordinateurs 20.

De préférence, le dispositif 10 de partage, crée, via son logiciel d'exploitation et un logiciel dédié au partage de données, son propre réseau local, les utilisateurs se connectant à ce réseau local de manière transparente grâce à l'installation d'un module du logiciel de partage sur leurs ordinateurs 20.

Dans le cadre d'un travail collaboratif, différents ordinateurs ou terminaux comportant un ordinateur 20 de différents utilisateurs sont connectés au dispositif 10 de partage via ses moyens de connexion réseau.

Dans ce cas, le procédé permet que des captures d'images instantanées de données soient effectuées sur différents ordinateurs ou terminaux 20 connectés, puis transmises au dispositif 10 de partage via ses moyens de connexion réseau, et puis sont affichées simultanément sous la forme de différentes vignettes (48-1,48-2) sur l'écran tactile 12.

Chaque d'image instantanée, et donc le contenu de chaque vignette (48-1,48-2), consiste en une image en deux dimensions ou en trois dimensions de données à partager ouvertes sur un ordinateur 20 connecté au dispositif 10 de partage.

Par image instantanée, il convient de comprendre dans le contexte de l'invention une représentation figée à un instant choisi par un opérateur d'une information numérique.

A priori une image instantanée comporte la représentation des données devant être affichées sous la forme de fichiers répondant à un standard. Il peut s'agir d'informations textuelles ou de la représentation sous forme graphique de l'interprétation des données.

Une image instantanée peut donc correspondre à tout type de fichier numérique, par exemple les fichiers les plus répandus tel que ceux répondant aux standards identifiés dans les fichiers de type.JPG, .PNG, .PDF, .DOC, .ODT, STEP....

Une image instantanée peut également correspondre à des combinaisons de fichiers, par exemple pour contenir des informations textuelles qui seraient être copiées ou entrées par un utilisateur.

Dans un mode de réalisation, les données représentent une URL ou des informations textuelles qui se suffisent à elles-mêmes ou destinées à compléter les informations accessibles dans une autre image instantanée.

Une image instantanée peut résulter de la capture ou de l'enregistrement des données interprétées et/ou affichées sur l'écran d'un terminal informatique.

Dans une forme préférée, une image instantanée correspond à un ensemble de données formant un fichier image de tout ou partie d'un écran, permettant de partager le contenu de l'écran d'un utilisateur à un instant donné.

Avantageusement, dans cette forme préférée, ledit ensemble de données comporte en plus du fichier image des métadonnées, générées automatiquement et ou générées par l'utilisateur, donnant des caractéristiques des contenus interprétés et/ou affichés au moment de la capture de l'image instantanée.

Dans un autre forme, les données correspondent à un flux vidéo encodé en temps réel d'un affichage écran, pouvant être décodé par les moyens de traitement du dispositif de partage, et permettant ainsi de partager à distance les animations de l'écran d'un terminal.

Dans une autre forme, les données correspondent à un enregistrement sous forme d'image d'un ensemble d'annotations réalisées par-dessus un ensemble d'images instantanées, le dispositif (10) de partage étant considéré comme un terminal ordinateur.

Dans ce contexte, une image instantanée est par exemple une image photographique, par extension un fichier vidéo, ou une copie d'écran pour une image en deux dimensions, ou par exemple une représentation tridimensionnelle d'un objet

manipulable dans un espace virtuel en trois dimensions, comme par exemple un objet modélisé à l'aide d'un logiciel de conception en trois dimensions pour une image instantanée en trois dimensions.

L'invention entend par espace virtuel, en deux ou en trois dimensions, un environnement fictif, en deux ou en trois dimensions, créé par un ordinateur et affichable sur un écran.

Eventuellement, il peut aussi être prévu une visualisation en trois dimensions sur l'écran tactile 12 grâce à un procédé stéréoscopique par exemple.

Les différentes d'images instantanées pouvant être utilisées par le dispositif 10 de partage sont créées en premier lieu sur les ordinateurs 20 connectés à l'aide de leur logiciel d'exploitation, ou de programmes installés sur ces ordinateurs pour créer, modifier ou simplement lire les données à partager, ou à partir d'autres programmes utilitaires.

Les différentes d'images instantanées de données sur les différents ordinateurs 20 connectés peuvent être effectuées de manière automatique par les logiciels installés, mais de préférence, les captures d'images instantanées sont déclenchées par les utilisateurs afin de contrôler les contenus partagés.

Selon l'invention, un programme léger est installé sur les ordinateurs clients et concentre l'ensemble des fonctionnalités de communication. L'utilisateur peut ainsi transmettre au dispositif 10 de partage visuel de données une capture d'une image instantanée du contenu de son écran par un simple clic sur un bouton, ou une capture d'une image instantanée d'un fichier stocké sur son disque dur en glissant et déposant l'icône de ce fichier sur celle du programme de partage.

Avantageusement, une telle solution permet de transmettre tout type d'information qui peut être lu par l'ordinateur source 20 sur lequel est réalisé la capture d'une image instantanée, et non nécessairement dans sa forme native sur le dispositif 10, et accélère le transfert de l'information et la fluidité de la réunion en évitant de stocker temporairement l'information sur un périphérique de stockage de masse, qui peut néanmoins toujours être utilisé.

Il est important de souligner le caractère instantané des captures utilisées par le procédé et le dispositif 10 de partage visuel de données.

Par opposition aux méthodes de travail collaboratif dans lesquelles des données à partager sont synchronisées en temps réel entre un ordinateur et un dispositif de partage, la présente invention permet de faciliter et d'automatiser, au moyen d'une interface simplifiée le partage de données dans l'état où elles sont affichées à un moment précis sur l'ordinateur 20 d'un utilisateur souhaitant partager des données.

Le partage peut ensuite être répété autant de fois que nécessaire pendant une réunion de travail collaboratif.

Ainsi, un utilisateur peut modifier les données à partager sur son ordinateur au cours de la réunion, et partager au fur-et-à-mesure les modifications apportées avec les autres utilisateurs, comme il le ferait en imprimant ses données à chaque nouvelle modification.

Dans un mode de fonctionnement, l'affichage sur le dispositif 10 d'images instantanées de l'écran d'un ordinateur ou d'un terminal comportant un ordinateur connecté est réalisé de manière continue avec une fréquence suffisante pour être perçu comme une recopie temps réel de l'écran du terminal.

Le fait de prévoir ce fonctionnement du dispositif 10 de partage autour de captures d'images instantanées permet de limiter l'utilisation de la bande passante du réseau local, d'augmenter le nombre d'utilisateurs pouvant partager des données simultanément, et d'améliorer la rapidité du partage des données.

De manière générale, ce fonctionnement basé sur la transmission de captures d'images instantanées permet d'améliorer la flexibilité du partage de données, les données étant partagées sur une seule surface 22 et utilisables par tous les utilisateurs.

Cette flexibilité du partage de données tient aussi à l'ergonomie de l'interface tactile s'affichant sur l'écran tactile 12 et permettant aux utilisateurs de manipuler les données partagées.

En effet, suivant le procédé de partage selon l'invention prévoit que chaque vignette (48, 48-1, 48-2) affichée sur l'écran tactile 12 est manipulable via l'écran tactile.

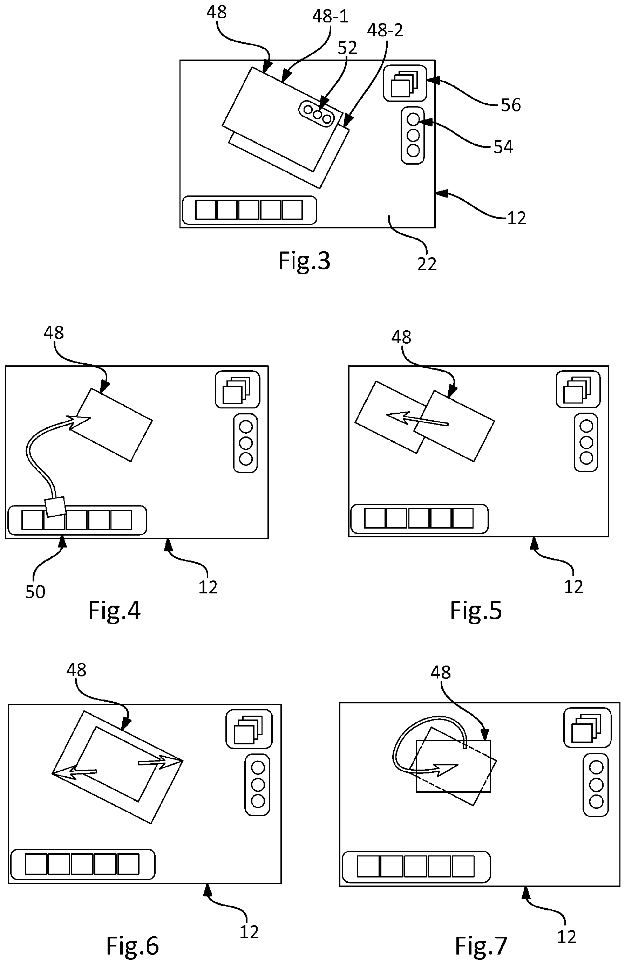

Les figures 4 à 7 illustrent quelques exemples de manipulations de vignettes 48 permises par l'écran tactile 12 avec une interface tactile préférée.

Comme l'illustre la figure 4, l'interface tactile préférée comprend une bibliothèque virtuelle 50 de données à partager prenant la forme d'un premier bandeau dans lequel sont affichées des versions réduites des vignettes correspondant aux différentes captures d'images instantanées effectuées et partagées par les ordinateurs connectés, par exemple au cours d'une séance de travail.

Par la suite, une opération du type glisser-déposer depuis cette bibliothèque 50 vers une position souhaitée de l'écran permet de créer une vignette 48 exploitable sur l'espace de travail offert par la surface 22 de l'écran tactile 12.

Dans un mode de réalisation préféré, des filtres peuvent également être associés à cette bibliothèque 50 pour sélectionner temporairement le contenu qui y est affiché et faciliter la recherche de l'information.

Comme illustré en figure 5, l'interface tactile préférée permet de déplacer une vignette 48, par exemple pour la positionner devant un utilisateur en particulier.

Comme illustré en figure 6, l'interface tactile permet aussi de redimensionner une vignette 48, pour la réduire ou l'agrandir, ou de la faire pivoter, comme l'illustre la figure 7, pour l'orienter correctement devant un utilisateur en particulier ou la positionner à côté d'autres contenus complémentaires.

Avantageusement, au contraire des solutions connues, le partage et la manipulation des données sont réalisés de façon intuitive de sorte que ces opérations apparaissent naturelles à l'utilisateur et qu'elles s'intègrent facilement dans son processus de travail.

Les actions identifiées ci-dessus sur les vignettes sont des exemples non limitatifs, et l'homme du métier pourra mettre en oeuvre l'interface tactile pour davantage de possibilités d'action sur les vignettes 48.

Par exemple, l'interface peut aussi permettre de dupliquer une vignette pour que chaque utilisateur ait la même vignette à sa disposition, comme le permettraient des photocopies papiers, ou de supprimer une vignette, par exemple en la faisant sortir de l'espace de travail offert par la surface 22 de l'écran tactile 12, etc.

Ces manipulations des vignettes (48,48-1,48-2) peuvent être effectuées par des actions tactiles, tel qu'un double tapotement ou des glissements des doigts, ou par des boutons virtuels 52, par exemple accroché à chaque vignette, ou par des boutons virtuels 54 indépendants et affichés en permanence sur l'espace de travail offert par la surface 22 de l'écran tactile 12.

Il peut en outre être prévu une fenêtre d'archivage 56 dans laquelle les données partagées peuvent être sauvegardées, par exemple par glisser-déposer, au cours d'une réunion de travail collaboratif et sous la forme de vignettes, ou de captures d'écran de tout ou partie du contenu de l'écran tactile 12.

Les données partagées ainsi déposées dans la fenêtre d'archivage 56, comportant les images instantanées transmises au dispositif 10 et les annotations associées réalisées au moyen du dispositif au cours de la réunion, sont avantageusement utilisées pour la génération automatique ou assistée d'un compte rendu de réunion.

Avantageusement, les moyens de connexion sont étant bi-directionnels.

Les captures d'images instantanées sur le dispositif 10 peuvent également être envoyées à au moins un des ordinateurs ou des terminaux comportant un ordinateur connectés au dispositif, permettant ainsi de construire un compte rendu en cours de réunion.

Selon une fonctionnalité avantageuse et facilitant les échanges entre les utilisateurs, le procédé de partage permet, via l'écran tactile 12, de lier au moins une vignette 48-1 à au moins une autre vignette 48-2 de façon que des manipulations effectuées sur l'une des vignettes, par exemple des annotations, soient répercutées en temps réel sur la ou les autre(s) vignettes.

Ainsi, il est possible que chaque utilisateur ait une vignette dupliquée devant lui sur laquelle il suit les manipulations effectuées par un autre utilisateur sur une autre vignette.

Selon une fonctionnalité perfectionnée du partage de données, le procédé de partage peut aussi prévoir que le contenu de chaque vignette 48 affichée sur l'écran tactile 12 est manipulable via l'écran tactile 12.

Par exemple, l'interface tactile peut prévoir des boutons virtuels de commande en fonction du contenu de chaque vignette.

Ainsi, l'interface tactile peut offrir les commandes habituelles de lecture d'un fichier vidéo, ou permettre de déplacer un objet virtuel dans un environnement virtuel en deux ou trois dimensions, de pointer une zone du contenu d'une vignette, ou de lancer des animations, etc.

Avantageusement, en combinant la manipulation du contenu avec la liaison des vignettes, le contenu d'une vignette dupliquée devant différents utilisateurs peut être manipulé en direct par l'utilisateur partageant ses données, en fonction des besoins de sa présentation.

Par exemple, la fonction de pointage associée à la liaison des vignettes peut être mise en oeuvre pour donner des explications précises sur le contenu d'une vignette.

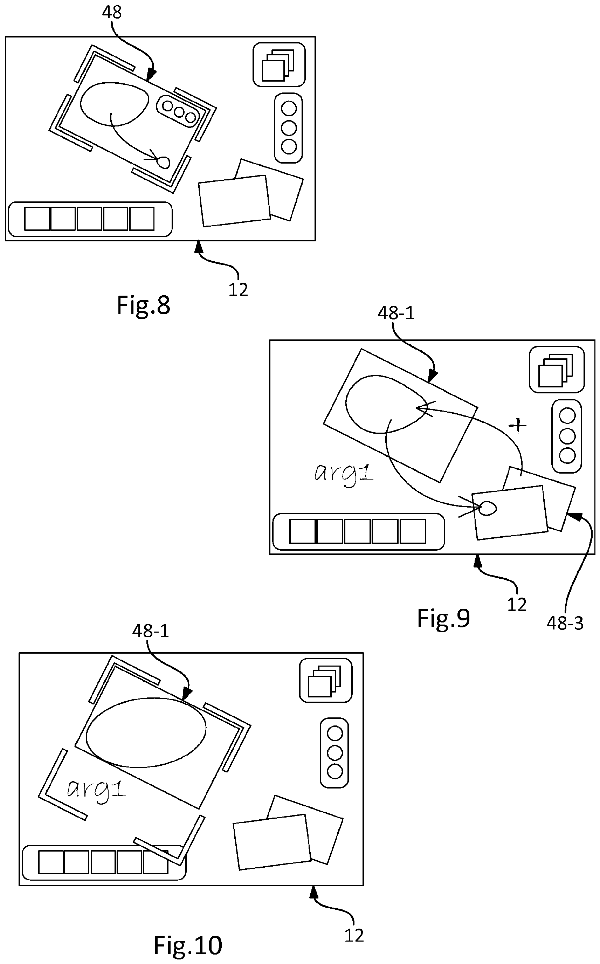

Selon une autre fonctionnalité visant à améliorer les échanges entre utilisateurs, le procédé de partage visuel de données prévoit qu'une vignette 48 ou qu'un groupe de vignettes (48-1,48-2,48-3) est annotable par des données complémentaires via l'écran tactile 12, comme l'illustrent respectivement les figures 8 et 9.

Ces annotations peuvent être effectuées par un utilisateur tactilement ou à l'aide d'un stylet électronique 46 offrant plus de précision, sur la ou les vignette(s) ou à proximité de celle(s)-ci.

Avantageusement, en combinant l'annotation avec la liaison des vignettes, différents utilisateurs peuvent observer en direct les annotations réalisées par chacun sur le contenu d'une vignette ou de plusieurs vignette(s) dupliquée(s) devant chacun d'eux.

Lorsque, le dispositif 10 de partage comporte des boutons physiques (36,38), avantageusement tout ou partie du contenu global de l'écran tactile 12 est manipulable via ces boutons physiques (36, 38).

Par exemple les boutons physiques (36, 38) permettent d'effectuer des actions telles que la suppression ou la sauvegarde de tout ou partie du contenu global de l'écran tactile 12, par exemple par une capture d'une vignette seule comme illustré par les encadrés en figure 8 ou d'une vignette et d'une annotation comme illustré par les encadrés en figure 10, ou de lancer les fonctionnalités d'annotation, de duplication et de liaison, etc.

Dans un mode de réalisation préféré, une des fonctions assurée par au moins un des boutons physiques (36,38) est de bloquer tout ou partie des interprétations de tout ou partie des interactions sur tout ou partie de l'écran tactile 12. De cette façon, avantageusement, au moins une partie des utilisateurs peut toucher, pointer, indiquer, montrer les contenus présents sur l'écran tactile 12 sans déclencher d'interactions avec ces contenus.

De manière générale, le procédé de partage prévoit avantageusement que tout ou partie du contenu global de l'écran tactile 12 est aussi manipulable par les boutons virtuels 54, pour effectuer les mêmes actions que celles réalisées avec les boutons physiques (36,38), ou pour effectuer des actions complémentaires.

Ainsi, un bouton virtuel affiché sur l'écran tactile 12 peut également permettre de bloquer tout ou partie des interprétations de tout ou partie des interactions sur tout ou partie de l'écran tactile 12.

La zone qu'occupe à l'écran ledit bouton virtuel conserve de préférence tout ou partie de son caractère interactif.

Par exemple, les boutons physiques (36,38) ou les boutons virtuels 54 permettent de sauvegarder une vignette 48, un groupe de vignettes (48-1,48-2,48-3), et/ou tout ou partie du contenu global de l'écran tactile 12 régulièrement dans les moyens de mémorisation du dispositif 10 de partage au cours d'une réunion de travail collaboratif.

Avantageusement, des données supplémentaires, telles un horodatage ou une date de dernière modification, peuvent être ajoutées aux données sauvegardées, par exemple sous la forme de « tags ».

La sauvegarde d'une vignette 48, d'un groupe de vignettes (48-1, 48-2,48 -3), et/ou de tout ou partie du contenu global de l'écran tactile 12 peut aussi être automatisée.

De préférence, suivant le procédé de partage les éléments sauvegardés sont exportables via les prises 42 pour la connexion de périphériques extérieurs de stockage de masse, notamment en vue de la réalisation d'un compte rendu de réunion ou d'un archivage.

## Revendications

1. Ensemble comportant un dispositif (10) de partage visuel de données et au moins un ordinateur, ou un terminal incorporant un ordinateur, (20), dans lequel le dispositif (10) de partage visuel de données comprend des moyens de traitement et des moyens de mémorisation de données, un écran tactile (12), le dispositif (10) comportant un bâti (16) avec au moins un rebord (18) adjacent à l'écran tactile (12) et sur lequel est posé ledit ordinateur, ou terminal incorporant un ordinateur, sans qu'ils empiètent sur la surface (22) de l'écran tactile, dans lequel :
- le dispositif (10) comporte des moyens de connexion réseau autorisant une connexion avec un ou plusieurs ordinateurs, ou terminaux incorporant un ordinateur ;
- l'au moins un ordinateur, ou terminal incorporant un ordinateur, (20) est connecté au réseau auquel appartient le dispositif (10) ;
- ledit au moins un ordinateur, ou terminal incorporant un ordinateur, comporte un logiciel client, actif lorsque ledit ordinateur, ou terminal incorporant un ordinateur, est connecté par réseau au dispositif (10), ledit logiciel client comportant une suite d'instructions qui réalise la transmission par le réseau au dispositif (10) d'une image instantanée, c'est-à-dire tout moyen de représenter, enregistrer et partager des informations numériques, de quelque dimension ou format qu'elles soient, ladite transmission étant déclenchée par au moins un clic sur un bouton virtuel du logiciel client résidant sur ledit ordinateur, ou terminal incorporant un ordinateur, ou par un glisser/déposer d'un fichier dans une fenêtre d'envoi dudit logiciel client depuis l'au moins un ordinateur, ou terminal incorporant un ordinateur (20), suite à une action de capture de ladite image instantanée, sur et depuis ledit ordinateur, ou ledit terminal incorporant un ordinateur ;
- le dispositif (10) comportant un logiciel réalisant la mémorisation d'une image instantanée transmise par l'au moins un ordinateur, ou terminal incorporant un ordinateur, et conjointement l'affichage sur l'écran tactile (12) de ladite image instantanée sous la forme d'au moins une vignette, ledit logiciel comportant un ensemble d'unités logiques comprenant la capacité d'interpréter des actions d'un opérateur sur la surface (22) de l'écran tactile pour agir sur la vignette affichée.

2. Ensemble suivant la revendication 1 dans lequel la capture d'une image instantanée réalisée sur l'ordinateur ou terminal incorporant un ordinateur (20) comporte des métadonnées prédéfinies dans le logiciel client résident sur le dit ordinateur, ou terminal incorporant un ordinateur, le cas échéant suite à un paramétrage ou une saisie de données par l'utilisateur de l'ordinateur, ou terminal incorporant un ordinateur, associée à l'image et transmise au système avec ladite image instantanée capturée.

3. Ensemble suivant la revendication 1 ou la revendication 2 dans lequel les actions sur une vignette affichée comportent tout ou partie de : réduire une vignette en icône et afficher l'image instantanée correspondant à une vignette ;manipuler ladite image instantanée ; dupliquer ladite image instantanée ; agréger une pluralité d'images instantanées reçues ; enrichir ladite image instantanée ; annoter ladite image instantanée ; archiver ladite image instantanée ; renvoyer ladite image instantanée, le cas échéant enrichie, à un ou plusieurs ordinateurs connectés en réseau avec le dispositif (10).

4. Ensemble suivant l'une des revendications précédentes dans lequel le système comporte au moins un bouton physique (36, 38) connecté aux moyens de traitement et permettant à un utilisateur d'agir sur les données affichées sur l'écran tactile (12).

5. Ensemble suivant l'une des revendications précédentes dans lequel les moyens de traitement sont configurés de sorte qu'une action sur un bouton virtuel (52) affiché sur l'écran tactile (12) et ou un bouton physique (36, 38) a pour effet de bloquer tout ou partie des interprétations de tout ou partie des interactions d'un opérateur sur tout ou partie de l'écran tactile (12).

6. Ensemble suivant l'une des revendications précédentes dans lequel les moyens de traitement sont configurés de sorte qu'une action sur un bouton virtuel (52) affiché sur l'écran tactile (12) et ou un bouton physique (36, 38) a pour effet de réaliser une capture d'une image instantanée de données interprétées et ou affichées sur l'écran tactile (12) et de sauvegarder ladite capture dans les moyens de mémorisation des données.

7. Ensemble suivant la revendication 6 dans lequel les moyens de traitement sont configurés de sorte que des images instantanées de données capturées sur l'écran tactile (12) et sauvegardées dans les moyens de mémorisation des données sont accessibles par une fenêtre d'archivage (56) affichée sur l'écran tactile.

8. Ensemble suivant l'une des revendications précédentes dans lequel les moyens de traitement sont configurés de sorte qu'une action sur un bouton virtuel (52) affiché sur l'écran tactile (12) et ou un bouton physique (36, 38) a pour effet d'activer des fonctions d'annotation sur tout ou partie de l'écran tactile (12).

9. Ensemble suivant l'une des revendications précédentes dans lequel le bâti (16) du dispositif (10) est agencé sous la forme d'une table dans laquelle est intégré l'écran tactile (12) entre quatre rebords formant un cadre audit écran tactile, ledit cadre étant d'une largeur égale ou supérieure à vingt centimètres, et le dit bâti comportant de préférence des prises de raccordement au réseau local et ou des prises d'alimentation électrique pour au moins un ordinateur ou terminal incorporant un ordinateur (20), de préférence autant de prises de chaque type que de postes de travail prévus autour de la table.

10. Procédé de partage visuel de données dans lequel des données devant être partagées entre plusieurs personnes sont affichées sur un écran tactile (12) d'un dispositif (10) de partage visuel de données à partir de données transmises par au moins un ordinateur ou un terminal incorporant un ordinateur (20), lequel procédé de partage visuel de données comporte une étape préalable de connexion de l'au moins un ordinateur, ou terminal incorporant un ordinateur, une étape de reconnaissance dudit ordinateur, ou terminal incorporant un ordinateur, par le dispositif (10) de partage visuel de données et d'affichage sur un écran dudit au moins un ordinateur, ou terminal incorporant un ordinateur, de données à partager, et lequel procédé de partage visuel de données comporte ensuite les étapes :
- d'effectuer sur et depuis l'ordinateur, ou le terminal incorporant un ordinateur (20), une action de capture de données à partager, présentes sur ledit ordinateur ou ledit terminal incorporant un ordinateur, préalablement connecté, sous la forme d'une image instantanée, c'est-à-dire tout moyen de représenter, enregistrer et partager des informations numériques, de quelque dimension ou format qu'elles soient ;
- de déclencher la transmission depuis l'au moins un ordinateur, ou terminal incorporant un ordinateur, par au moins un clic sur un bouton virtuel d'un logiciel client résidant sur ledit ordinateur, ou terminal incorporant un ordinateur, ou par un glisser/déposer d'un fichier dans une fenêtre d'envoi dudit logiciel client, de l'image instantanée capturée au dispositif (10) de partage visuel de données via ses moyens de connexion réseau ;
- de mémoriser par le dispositif (10) de partage visuel de données de ladite image instantanée, et ;
- d'afficher ladite image instantanée sous la forme d'au moins une vignette (48, 48-1,48-2) sur l'écran tactile (12) dudit système de partage visuel de données ;
- d'interpréter des actions sur une surface de l'écran tactile (12) comme des actions sur l'au moins une vignette affichée.

11. Procédé suivant la revendication 10 dans lequel le dispositif (10) transmet une image instantanée de données capturée sur ledit dispositif de partage visuel de données, via les moyens de connexion réseau, à un ordinateur ou terminal incorporant un ordinateur (20), connecté audit réseau, par au moins un clic sur une vignette affichée sur l'écran tactile (12) et identifiant ledit ordinateur, ou terminal incorporant un ordinateur, ou par un glisser/déposer d'un fichier dans ladite vignette.

12. Procédé suivant l'une des revendications 10 ou 11 dans lequel le dispositif (10) de partage visuel bloque tout ou partie des interprétations de tout ou partie des interactions d'un opérateur sur tout ou partie de l'écran tactile (12) suite à une action sur un bouton virtuel (52) affiché sur l'écran tactile (12) et ou un bouton physique (36, 38).

13. Procédé suivant l'une des revendications 10 à 12 dans lequel une image en deux dimensions ou en trois dimensions est affichée sur l'écran tactile (12) lorsque l'image instantanée transmise par l'ordinateur ou terminal incorporant un ordinateur (20) correspond à des données numériques d'une image en deux dimensions ou en trois dimensions.

14. Procédé suivant l'une des revendications 10 à 13 dans lequel, lorsqu'une image instantanée est représentée deux ou plus fois par des vignettes affichées sur l'écran tactile (12), tout ou partie d'interprétations réalisées par le dispositif (10) sur une des dites vignettes, d'actions d'un opérateur, est répercutée sur toutes les autres dites vignettes.

15. Procédé suivant l'une des revendications 10 à 14 dans lequel le dispositif (10) conserve dans des moyens de mémorisation dudit dispositif des sauvegardes de tout ou partie des images de l'écran tactile (12), lesdites sauvegardes étant réalisées périodiquement à intervalles de temps défini, et ou à chaque action concourant à un enrichissement des informations contenues dans une image instantanée, et ou sur une action d'un opérateur sur un bouton virtuel ou réel.

## Patentansprüche

1. Anordnung, umfassend eine Vorrichtung (10) zur visuellen gemeinsamen Nutzung von Daten und wenigstens einen Rechner, oder ein Endgerät, das einen Rechner umfasst, (20), wobei die Vorrichtung (10) zur visuellen gemeinsamen Nutzung von Daten Verarbeitungsmittel und Speichermittel für Daten, einen Touchscreen (12) umfasst, wobei die Vorrichtung (10) ein Gestell (16) mit wenigstens einem Rand (18) umfasst, der an den Touchscreen (12) angrenzt und auf den der Rechner, oder das Endgerät, das einen Rechner umfasst, gestellt ist, ohne dass sie auf die Oberfläche (22) des Touchscreens übergreifen, wobei:
- die Vorrichtung (10) Netzwerkverbindungsmittel umfasst, die eine Verbindung mit einem oder mehreren Rechnern, oder Endgeräten, die einen Rechner umfassen, zulassen;
- der wenigstens eine Rechner, oder das Endgerät, das einen Rechner umfasst, (20) mit dem Netzwerk verbunden ist, zu dem die Vorrichtung (10) gehört;
- der wenigstens eine Rechner, oder das Endgerät, das einen Rechner umfasst, eine Client-Software umfasst, die aktiv ist, wenn der Rechner, oder das Endgerät, das einen Rechner umfasst, über das Netzwerk mit der Vorrichtung (10) verbunden ist, wobei die Client-Software eine Anweisungsfolge umfasst, welche die Übertragung einer Momentaufnahme über das Netzwerk an die Vorrichtung (10) ausführt, das heißt jedweden Mittels zum Darstellen, Speichern und gemeinsamen Nutzen digitaler Informationen, unabhängig von deren Größe oder Format, wobei die Übertragung durch wenigstens einen Klick auf eine virtuelle Taste der Client-Software, die sich auf dem Rechner, oder dem Endgerät, das einen Rechner umfasst, befindet, oder durch Ziehen/Ablegen einer Datei in ein Sendefenster der Client-Software ausgehend von dem wenigstens einem Rechner, oder dem Endgerät, das einen Rechner umfasst, (20) infolge einer Aktion zur Erfassung der Momentaufnahme, auf oder ausgehend von dem Rechner, oder dem Endgerät, das einen Rechner umfasst, ausgelöst wird;
- wobei die Vorrichtung (10) eine Software umfasst, welche die Speicherung einer Momentaufnahme, die von dem wenigstens einem Rechner, oder dem Endgerät, das einen Rechner umfasst, übertragen wird, und gemeinsam die Anzeige der Momentaufnahme auf dem Touchscreen (12) in Form wenigstens einer Miniaturansicht ausführt, wobei die Software eine Anordnung von Logikeinheiten umfasst, welche die Fähigkeit umfassen, Aktionen eines Bedieners auf der Oberfläche (22) des Touchscreens zu interpretieren, um auf die angezeigte Miniaturansicht einzuwirken.

2. Anordnung nach Anspruch 1, wobei die Erfassung einer Momentaufnahme, welche durch den Rechner, oder das Endgerät, das einen Rechner umfasst, (20) ausgeführt wird, Metadaten umfasst, die in der Client-Software vordefiniert sind, die sich auf dem Rechner, oder dem Endgerät, das einen Rechner umfasst, befindet, gegebenenfalls infolge einer Parametrierung oder einer Dateneingabe durch den Benutzer des Rechners, oder des Endgeräts, das einen Rechner umfasst, in Verbindung mit der Aufnahme und übertragen an das System mit der erfassten Momentaufnahme.

3. Anordnung nach Anspruch 1 oder Anspruch 2, wobei die Aktionen auf einer angezeigten Miniaturansicht zur Gänze oder teilweise umfassen: Minimieren einer Miniaturansicht zu einem Symbol und Anzeigen der Momentaufnahme entsprechend einer Miniaturansicht; Manipulieren der Momentaufnahme; Duplizieren der Momentaufnahme; Aggregieren einer Vielzahl von empfangenen Momentaufnahmen; Anreichern der Momentaufnahme; Kommentieren der Momentaufnahme; Archivieren der Momentaufnahme; Zurücksenden der, gegebenenfalls angereicherten, Momentaufnahme an einen oder mehrere Rechner, die mit der Vorrichtung (10) netzwerkverbunden sind.

4. Anordnung nach einem der vorstehenden Ansprüche, wobei das System wenigstens eine physische Taste (36, 38) umfasst, die mit den Verarbeitungsmitteln verbunden ist und einem Benutzer ermöglicht, auf die Daten, die auf dem Touchscreen (12) angezeigt sind, einzuwirken.

5. Anordnung nach einem der vorstehenden Ansprüche, wobei die Verarbeitungsmittel so konfiguriert sind, dass eine Aktion auf einer virtuellen Taste (52), die auf dem Touchscreen (12) angezeigt ist, und oder einer physischen Taste (36, 38) dazu führt, dass Interpretationen aller oder eines Teils der Interaktionen eines Bedieners auf dem gesamten oder einem Teil des Touchscreens (12) zur Gänze oder teilweise blockiert werden.

6. Anordnung nach einem der vorstehenden Ansprüche, wobei die Verarbeitungsmittel so konfiguriert sind, dass eine Aktion auf einer virtuellen Taste (52), die auf dem Touchscreen (12) angezeigt ist, und oder einer physischen Taste (36, 38) dazu führt, dass eine Erfassung einer Momentaufnahme von interpretierten und oder auf dem Touchscreen (12) angezeigten Daten ausgeführt wird und die Erfassung in den Datenspeichermitteln gespeichert wird.

7. Anordnung nach Anspruch 6, wobei die Verarbeitungsmittel so konfiguriert sind, dass die Momentaufnahmen von auf dem Touchscreen (12) erfassten und in den Datenspeichermitteln gespeicherten Daten über ein Archivierungsfenster (56) zugänglich sind, das auf dem Touchscreen angezeigt ist.

8. Anordnung nach einem der vorstehenden Ansprüche, wobei die Verarbeitungsmittel so konfiguriert sind, dass eine Aktion auf einer virtuellen Taste (52), die auf dem Touchscreen (12) angezeigt ist, und oder einer physischen Taste (36, 38) dazu führt, dass Kommentarfunktionen auf dem gesamten oder einem Teil des Touchscreens (12) aktiviert werden.

9. Anordnung nach einem der vorstehenden Ansprüche, wobei das Gestell (16) der Vorrichtung (10) in Form eines Tischs angeordnet ist, in dem der Touchscreen (12) zwischen vier Rändern, die einen Rahmen um den Touchscreen bilden, integriert ist, wobei der Rahmen eine Breite von gleich oder größer zwanzig Zentimetern aufweist, und das Gestell vorzugsweise Anschlussbuchsen für das lokale Netzwerk und oder Buchsen für die Stromversorgung für wenigstens einen Rechner oder ein Endgerät, das einen Rechner umfasst, (20) umfasst, vorzugsweise so viele Buchsen jedes Typs wie Arbeitsplätze rund um den Tisch vorgesehen sind.

10. Verfahren zur visuellen gemeinsamen Nutzung von Daten, wobei Daten, die von mehreren Personen gemeinsam genutzt werden müssen, auf einem Touchscreen (12) einer Vorrichtung (10) zur visuellen gemeinsamen Nutzung von Daten ausgehend von Daten angezeigt werden, die von wenigstens einem Rechner oder einem Endgerät, das einen Rechner umfasst, (20) übertragen werden, wobei das Verfahren zur visuellen gemeinsamen Nutzung von Daten einen vorherigen Schritt des Verbindens des wenigstens einen Rechners, oder Endgeräts, das einen Rechner umfasst, einen Schritt des Erkennens des Rechners, oder Endgeräts, das einen Rechner umfasst, von der Vorrichtung (10) zur visuellen gemeinsamen Nutzung von Daten und des Anzeigens von gemeinsam zu nutzenden Daten auf einem Bildschirm des wenigstens einen Rechners, oder Endgeräts, das einen Rechner umfasst, umfasst, und wobei das Verfahren zur visuellen gemeinsamen Nutzung von Daten danach folgende Schritte umfasst:
- Durchführen auf oder ausgehend von dem Rechner, oder dem Endgerät, das einen Rechner umfasst, (20) einer Aktion zur Erfassung von gemeinsam zu nutzenden Daten, die auf dem Rechner oder dem Endgerät, das einen Rechner umfasst, vorhanden sind, der bzw. das zuvor verbunden wurde, in Form einer Momentaufnahme, das heißt jedweden Mittels zum Darstellen, Speichern und gemeinsamen Nutzen digitaler Informationen, unabhängig von deren Größe oder Format;
- Auslösen der Übertragung ausgehend von dem wenigstens einen Rechner, oder Endgerät, das einen Rechner umfasst, durch wenigstens einen Klick auf eine virtuelle Taste einer Client-Software, die sich auf dem Rechner, oder Endgerät, das einen Rechner umfasst, befindet, oder durch Ziehen/Ablegen einer Datei in ein Sendefenster der Client-Software, der erfassten Momentaufnahme an die Vorrichtung (10) zur visuellen gemeinsamen Nutzung von Daten über ihre Netzwerkverbindungsmittel;
- Speichern der Momentaufnahme durch die Vorrichtung (10) zur visuellen gemeinsamen Nutzung von Daten, und;
- Anzeigen der Momentaufnahme in Form von wenigstens einer Miniaturansicht (48, 48-1, 48-2) auf dem Touchscreen (12) des Systems zur visuellen gemeinsamen Nutzung von Daten;
- Interpretieren von Aktionen auf einer Oberfläche des Touchscreens (12) als Aktionen auf der wenigstens einen angezeigten Miniaturansicht.

11. Verfahren nach Anspruch 10, wobei die Vorrichtung (10) eine Momentaufnahme von Daten, die auf der Vorrichtung zur visuellen gemeinsamen Nutzung von Daten erfasst wurde, über die Netzwerkverbindungsmittel, an einen Rechner oder Endgerät, das einen Rechner umfasst, (20) überträgt, der bzw. das mit dem Netzwerk verbunden ist, durch wenigstens einen Klick auf eine Miniaturansicht, die auf dem Touchscreen (12) angezeigt ist und den Rechner, oder das Endgerät, das einen Rechner umfasst, identifiziert, oder durch ein Ziehen/Ablegen einer Datei in der Miniaturansicht.

12. Verfahren nach einem der Ansprüche 10 oder 11, wobei die Vorrichtung (10) zur visuellen gemeinsamen Nutzung Interpretationen aller oder eines Teils der Interaktionen eines Bedieners auf dem gesamten oder einem Teil des Touchscreens (12) infolge einer Aktion auf einer virtuellen Taste (52), die auf dem Touchscreen (12) angezeigt ist, und oder einer physischen Taste (36, 38) zur Gänze oder teilweise blockiert.

13. Verfahren nach einem der Ansprüche 10 bis 12, wobei eine zweidimensionale oder dreidimensionale Aufnahme auf dem Touchscreen (12) angezeigt wird, wenn die Momentaufnahme, die von dem Rechner oder Endgerät, das einen Rechner umfasst, (20) übertragen wird, digitalen Daten einer zweidimensionalen oder dreidimensionalen Aufnahme entspricht.

14. Verfahren nach einem der Ansprüche 10 bis 13, wobei, wenn eine Momentaufnahme durch Miniaturansichten, die auf dem Touchscreen (12) angezeigt sind, zwei oder mehrere Male dargestellt wird, alle oder ein Teil von Interpretationen, die von der Vorrichtung (10) auf einer der Miniaturansichten ausgeführt werden, aus Aktionen eines Bedieners, an alle anderen Miniaturansichten weitergegeben werden.

15. Verfahren nach einem der Ansprüche 10 bis 14, wobei die Vorrichtung (10) in den Speichermitteln der Vorrichtung Sicherungen von allen oder einem Teil der Aufnahmen des Touchscreens (12) bewahrt, wobei die Sicherungen periodisch in definierten Zeitabständen ausgeführt werden, und oder bei jeder Aktion, die zu einer Anreicherung der Informationen beiträgt, die in einer Momentaufnahme enthalten sind, und oder auf eine Aktion eines Bedieners auf eine virtuelle oder reelle Taste.

## Claims

1. Assembly including a device (10) for the visual sharing of data and at least one computer, or a terminal incorporating a computer, (20), wherein the device (10) for the visual sharing of data comprises processing means and data storage means, a touch screen (12), the device (10) including a frame (16) with at least one rim (18) adjacent to the touch screen (12) and whereon said computer, or terminal incorporating a computer, is placed, without their encroaching on the surface (22) of the touch screen, wherein:
- the device (10) includes network connection means allowing a connection with one or more computers, or terminals incorporating a computer;
- the at least one computer, or terminal incorporating a computer (20), is connected to the network to which the device (10) belongs;
- said at least one computer, or terminal incorporating a computer, includes client software, active when said computer, or terminal incorporating a computer, is connected by network to the device (10), said client software including a series of instructions that implements the transmission, by the network to the device (10), of an instantaneous image, i.e. any means of representing, recording and sharing digital information, of any dimension or format whatsoever, said transmission being triggered by at least one click on a virtual button of the client software resident on said computer, or terminal incorporating a computer, or by sliding/depositing a file in a sending window of said client software from the at least one computer, or terminal incorporating a computer (20), following an action of capturing said instantaneous image, on and from said computer, or said terminal incorporating a computer;
- the device (10) including software implementing the storage of an instantaneous image transmitted by at least one computer, or terminal incorporating a computer, and conjointly the display on the touch screen (12) of said instantaneous image in the form of at least one thumbnail, said software including a set of logic units comprising the ability to interpret actions of an operator on the surface (22) of the touch screen in order to act on the thumbnail displayed.

2. Assembly according to claim 1, wherein the capture of an instantaneous image made on the computer or terminal incorporating a computer (20) includes metadata predefined in the client software resident on said computer, or terminal incorporating a computer, where applicable following a parameterising or a capture of data by the user of the computer, or terminal incorporating a computer, associated with the image and transmitted to the system with said captured instantaneous image.

3. Assembly according to claim 1 or claim 2, wherein the actions on a displayed thumbnail include all or some of:
reducing a thumbnail into an icon and displaying the instantaneous image corresponding to a thumbnail;
manipulating said instantaneous image; duplicating said instantaneous image; aggregating a plurality of instantaneous images received; enhancing said instantaneous image; annotating said instantaneous image;
archiving said instantaneous image; sending said instantaneous image, where applicable enhanced, to one or more computers connected in a network with the device (10) .

4. Assembly according to one of the preceding claims, wherein the system includes at least one physical button (36, 38) connected to the processing means and enabling a user to act on the data displayed on the touch screen (12) .

5. Assembly according to one of the preceding claims, wherein the processing means are configured so that an action on a virtual button (52) displayed on the touch screen (12) and/or a physical button (36, 38) has the effect of blocking all or some of the interpretations of all or some of the interactions of an operator on all or part of the touch screen (12).

6. Assembly according to one of the preceding claims, wherein the processing means are configured so that an action on a virtual button (52) displayed on the touch screen (12) and/or a physical button (36, 38) has the effect of making a capture of an instantaneous image of data interpreted and/or displayed on the touch screen (12) and saving said capture in the data storage means.

7. Assembly according to claim 6, wherein the processing means are configured so that instantaneous images of data captured on the touch screen (12) and saved in the data storage means are accessible through an archiving window (56) displayed on the touch screen.

8. Assembly according to one of the preceding claims, wherein the processing means are configured so that an action on a virtual button (52) displayed on the touch screen (12) and/or a physical button (36, 38) has the effect of activating annotation functions on all or part of the touch screen (12).

9. Assembly according to one of the preceding claims, wherein the frame (16) of the device (10) is arranged in the form of a table wherein the touch screen (12) is integrated between four rims forming a frame to said touch screen, said frame having a width equal to or greater than twenty centimetres, and said frame preferably including sockets for connection to the local network and/or electrical supply sockets for at least one computer or terminal incorporating a computer (20), preferably as many sockets of each type as there are workstations provided around the table.

10. Method for the visual sharing of data, wherein data that are to be shared between a plurality of persons are displayed on a touch screen (12) of a device (10) for the visual sharing of data using data transmitted by at least one computer or a terminal incorporating a computer (20), said method for the visual sharing of data including a prior step of connecting the at least one computer, or terminal incorporating a computer, a step of recognition of said computer, or terminal incorporating a computer, by the device (10) for visual sharing of data, and of display on a screen of said at least one computer, or terminal incorporating a computer, of data to be shared, and said method for the visual sharing of data next including the steps of:
- implementing, on and from the computer, or the terminal incorporating a computer (20), an action of capturing data to be shared, present on said computer or said terminal incorporating a computer, previously connected, in the form of an instantaneous image, i.e. any means for representing, recording and sharing digital information, of any dimension or format whatsoever;
- triggering the transmission from the at least one computer, or terminal incorporating a computer, by at least one click on a virtual button of client software resident on said computer, or terminal incorporating a computer, or by sliding/depositing a file in a sending window of said client software, of the instantaneous image captured at the device (10) for visual sharing of data via the network connection means thereof;
- storing, by the device (10) for visual sharing of data, of said instantaneous image; and
- displaying said instantaneous image in the form of at least one thumbnail (48, 48-1, 48-2) on the touch screen (12) of said system for the visual sharing of data;
- interpreting actions on a surface of the touch screen (12) as actions on the at least one thumbnail displayed.

11. Method according to claim 10, wherein the device (10) transmits an instantaneous image of data captured on said device for the visual sharing of data, via the network connection means, to a computer or terminal incorporating a computer (20), connected to said network, by at least one click on a thumbnail displayed on the touch screen (12) and identifying said computer, or terminal incorporating a computer, or by sliding/depositing a file in said thumbnail.

12. Method according to one of claims 10 or 11, wherein the visual-sharing device (10) blocks all or some of the interpretations of all or some of the interactions of an operator on all or part of the touch screen (12) following an action on a virtual button (52) displayed on the touch screen (12) and/or a physical button (36, 38).

13. Method according to one of claims 10 to 12, wherein an image in two dimensions or in three dimensions is displayed on the touch screen (12) when the instantaneous image transmitted by the computer or terminal incorporating a computer (20) corresponds to digital data of an image in two dimensions or in three dimensions.

14. Method according to one of claims 10 to 13, wherein, when an instantaneous image is represented two or more times by thumbnails displayed on the touch screen (12), all or some of interpretations, made by the device (10) on one of said thumbnails, of actions of an operator, is passed on to all the other said thumbnails.

15. Method according to one of claims 10 to 14, wherein the device (10) keeps, in storage means of said device, backups of all or some of the images of the touch screen (12), said backups being made periodically at defined time intervals, and/or at each action contributing to an enhancement of the information contained in an instantaneous image, and/or on an action of an operator on a virtual or real button.
